# EUROPÄISCHE PATENTSCHRIFT

(11) **EP 1 600 679 B1**
(45) Veröffentlichungstag und Bekanntmachung des Hinweises auf die Patenterteilung: **09.01.2008**
(21) Anmeldenummer: 05010537.8
(22) Anmeldetag: 13.05.2005
(51) Int. Cl.: F16L 3/10, B60T 17/04

(54) **Verbindungsanordnung aus Kunststoff zum Festlegen eines Schlauches**
Plastic connection device for securing a hose
Dispositif de raccordement en plastique pour fixer un tuyau souple

(30) Priorität: 26.05.2004 DE 202004008388 U
(43) Veröffentlichungstag der Anmeldung: 30.11.2005
(73) Patentinhaber: Böllhoff Verbindungstechnik GmbH, 33649 Bielefeld (DE)
(72) Erfinder: Süssenbach, Rainer, 33803 Steinhagen (DE)
(74) Vertreter: Hauck Patent- und Rechtsanwälte

(56) Entgegenhaltungen:
- EP-A- 0 666 443
- DE-A1- 3 731 149
- FR-A- 2 683 608
- US-A- 4 601 448
- US-A- 5 460 247

## Beschreibung

Die vorliegende Erfindung betrifft eine Verbindungsanordnung zum Festlegen eines Schlauches an einem Halter, insbesondere zum Festlegen eines Bremsschlauches an einem fahrzeugfest angeordneten Halter für ein Fahrzeug.

Derartige Bremsschlauchbefestigungen sind beispielsweise am Fahrzeugrahmen in der Nähe eines Bremszylinders für ein Vorderrad eines zugehörigen Fahrzeuges angebracht und dienen insbesondere zur Zugentlastung des Bremsschlauches, der zum Bremszylinder geführt ist und bei Lenkbewegungen des Vorderrades entsprechende Bewegungen ausführt. Im Stand der Technik ist bereits eine derartige Verbindungsanordnung bekannt, die aus einer Stahlbuchse und einer Stahlklammer besteht, durch die der Bremsschlauch an einem plattenförmigen Halter des Fahrzeugrahmens festgelegt wird. Für die Montage der Verbindungsanordnung wird ein Bremsschlauchabschnitt in die Bohrung der Stahlbuchse eingeführt und anschließend in einem Faltbereich so kaltverformt, dass sich innere ringförmige Schnittkanten der Buchse in den Außenmantel des Bremsschlauches eingraben und verkrallen. Durch dieses "Vercrimpen" wird der Bremsschlauch sowohl gegen Verdrehen in Umfangsrichtung wie auch gegen Verschieben in Achsrichtung festgelegt. Zur Montage dieser Baueinheit an dem fahrzeugfesten Halter wird die Baueinheit in ein Loch des plattenförmig ausgebildeten Halters eingesteckt und mit der Stahlklammer am Halter festgelegt.

Nachteile dieser vorbekannten Verbindungsanordnung bestehen darin, dass die Stahlbuchse ein aufwändig herzustellendes Dreh- und Frästeil ist, dass beim "Vercrimpen" der Oberflächenschutz der beteiligten Bauteile beschädigt werden kann, was zu Korrosionsproblemen führt, dass die Montage, bei der der Bremsschlauch in die Stahlbuchse "eingefädelt und anschließend "vercrimpt " wird, relativ aufwändig ist und dass die aus Stahl bestehenden Bauteile ein relativ hohes Gewicht haben.

Aus DE 37 31 149 A1 ist eine Verbindungsanordnung in Form einer Zugentlastung für in elektrische Geräte einführbare elektrische Anschluss schnüre bekannt, bei der die Anschlussschnur in ihrem Einführungsbereich ein ihre äußeren Abmessungen überragendes Abschlussteil besitzt, das von einem in eine Öffnung des elektrischen Gerätes einführbaren und fixierbaren Adapter formschlüssig umgriffen ist. Der Adapter besteht aus zwei Halbschalen, die über ein Filmscharnier miteinander verbunden oder miteinander verrastbar sind. Jede der Halbschalen hat eine senkrecht zu ihrer axialen Richtung verlaufenden Rille zur Aufnahme eines Sicherungselementes, das U-förmige Klammer ausgebildet ist, die in den Endbereichen ihrer federnden Schenkel zueinander weisende Rastnasen besitzt.

Der vorliegenden Erfindung liegt die Aufgabe zugrunde, eine Verbindungsanordnung zum Festlegen eines Schlauches an einem Halter zu schaffen, die insgesamt aus Kunststoff hergestellt werden kann und möglichst einfach und kostengünstig hinsichtlich Fertigung und Montage ist.

Diese Aufgabe wird durch die in Anspruch 1 definierte Verbindungsanordnung gelöst.

Bei der erfindungsgemäß ausgebildeten Verbindungsanordnung ist die den Schlauch klemmend aufnehmende Buchse geteilt, d.h. sie besteht aus zwei Buchsenteilen, die beide aus Kunststoff hergestellt sind. Die beiden Buchsenteile sind durch Verrastungsmittel miteinander verbindbar, um sich zu der geschlossenen Buchse zu ergänzen. Die ebenfalls aus Kunststoff bestehende Klammer ist mit den beiden verbundenen Buchsenteilen in Eingriff bringbar, um die von ihnen gebildete geschlossene Buchse in einem Loch des plattenförmig ausgebildeten Halters festzulegen.

Da somit die gesamte Verbindungsanordnung aus Kunststoff besteht, ist die Gefahr von Korrosionsbildung von vorneherein vermieden. Ferner ergibt sich durch die Verwendung von Kunststoff eine entsprechende Gewichtsersparnis. Die beiden Bundteile wie auch die Klammer lassen sich in einfacher Weise durch Spritzgießen herstellen. Eine Bearbeitung durch Drehen und Fräsen entfällt daher. Schließlich ist aufgrund der Zweiteilung der Buchse ein axiales "Einfädeln" des Schlauches in die Buchse nicht erforderlich; vielmehr kann der Schlauch seitlich in eines der Buchsenteile eingelegt werden, ehe dieses Buchsenteil mit dem anderen Buchsenteil verrastet wird. Diese Art des Zusammenbaus ist insbesondere für eine automatische Montage der Verbindungsanordnung ausgelegt. Dies führt zu einem deutlich vereinfachten Prozessablauf in der Montagelinie und damit zu einer erheblichen Reduzierung des Montageaufwandes. Darüber hinaus ergibt sich durch das seitliche Einlegen des Schlauches eine hohe Montageflexibilität, die eine Anpassung der Verbindungsanordnung an unterschiedliche Abmessungen und unterschiedliche Lagen der Buchse relativ zum Schlauch ermöglicht. Schließlich entfällt auch das im Stand der Technik erforderliche "Vercrimpen" der Buchse.

Das bevorzugte Anwendungsgebiet der erfindungsgemäß ausgebildeten Verbindungsanordnung ist die Befestigung von Bremsschläuchen an fahrzeugfesten Haltern zwecks Zugentlastung des Bremsschlauches, wenngleich die erfindungsgemäß ausgebildete Verbindungsanordnung auch auf anderen Gebieten anwendbar ist, bei denen ein Schlauch zwecks Zugentlastung an einem Halter festgelegt werden muss.

Vorteilhafte Ausgestaltungen und Weiterbildungen der Erfindung sind in den Unteransprüchen definiert.

Anhand der Zeichnungen wird ein bevorzugtes Ausführungsbeispiel der Erfindung näher erläutert. Es zeigt:
Fig. 1 eine perspektivische Ansicht einer erfindungsgemäß ausgebildeten Verbindungsanordnung im fertig montierten Zustand;
Fig. 2 eine perspektivische Explosionsdarstellung der Verbindungsanordnung in Fig. 1;
Fig. 3 einen Längsschnitt in der Schnittebene III-III in Fig. 6 durch die Verbindungsanordnung der Fig. 1 ohne den Halter;
Fig. 4 einen Längsschnitt in der Schnittebene IV-IV in Fig. 6 durch die Verbindungsanordnung der Fig. 1 mit dem Halter;
Fig. 5 einen Längsschnitt in der Schnittebene IV-IV in Fig. 6 durch die Klammer allein im unverformten Zustand;
Fig. 6 einen Querschnitt in der Schnittebene VI-VI in Fig. 3 durch die Verbindungsanordnung ohne den Halter;
Fig. 7 einen der Fig. 6 entsprechenden Querschnitt durch eines der Buchsenteile allein;
Fig. 8 einen der Fig. 6 entsprechenden Querschnitt durch das andere Buchsenteil allein.

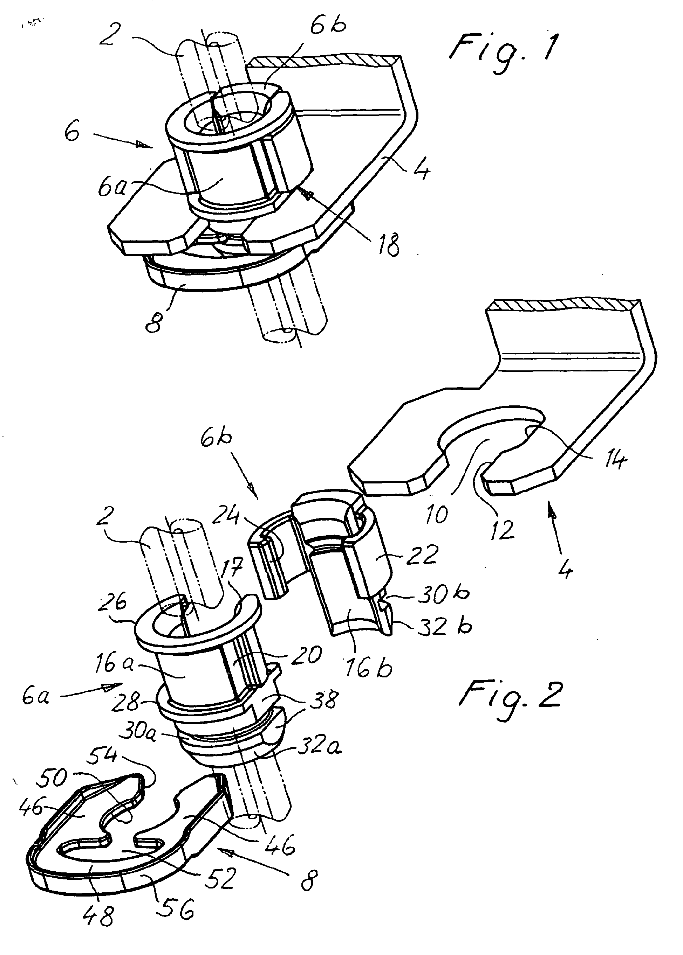

Die in den Figuren 1 und 2 dargestellte Verbindungsanordnung dient zum Festlegen eines (strichpunktiert angedeuteten) Bremsschlauches 2 an einem Halter 4, der am Fahrzeugrahmen (nicht gezeigt) eines Fahrzeuges in der Nähe eines Bremszylinders (nicht gezeigt) eines Vorderrades angebracht ist, so dass der Bremsschlauch 2 bei Lenkbewegungen des Vorderrades entsprechenden Bewegungen ausgesetzt ist. Die Verbindungsanordnung dient hierbei als Zugentlastung für den Bremsschlauch 2, der durch die Verbindungsanordnung sowohl in Drehrichtung wie auch in Axial- und Radialrichtung am Halter 4 festgelegt wird, wie noch genauer erläutert wird.

Die Verbindungsanordnung besteht aus einer Buchse 6, die sich aus zwei miteinander verbindbaren Buchsenteilen 6a, 6b zusammensetzt, und einer Klammer 8, welche sämtlich aus Kunststoff hergestellt sind. Die aus den beiden Buchsenteilen 6a, 6b zusammengesetzte Buchse 6 wird durch die Klammer 8 an dem Halter 4 befestigt, wie noch genauer erläutert wird.

Der fahrzeugfest angeordnete Halter 4 ist ein plattenförmiges Bauteil mit einem kreisrunden Loch 10, das eine seitliche Öffnung 12 und eine Abflachung 14 aufweist.

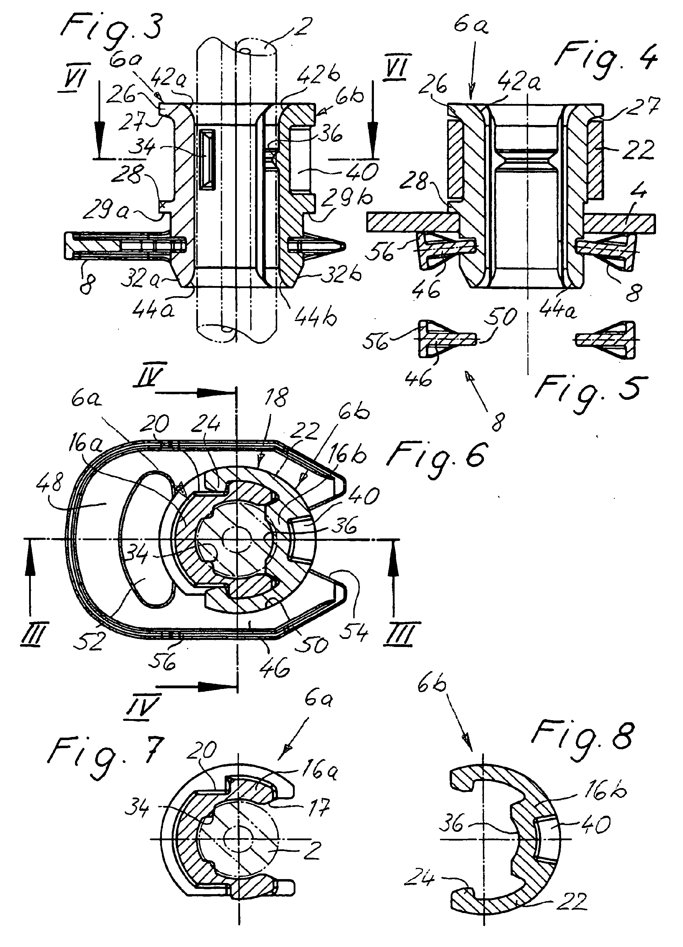

Zur Beschreibung der Buchsenteile 6a, 6b und der Klammer 8 wird nun zusätzlich auf die Figuren 3 bis 8 Bezug genommen.

Die Buchsenteile 6a und 6b bestehen jeweils aus einem ungefähr teilzylindrischen Schalenkörper 16a bzw. 16b, wobei sich der Schalenkörper 16a in Umfangsrichtung über mehr als 180° erstreckt und der Schalenkörper 16b sich in Umfangsrichtung über weniger als 180° erstreckt, so dass sie sich zu einem über 360° erstreckenden geschlossenen Schalenkörper ergänzen. Im dargestellten Ausführungsbeispiel erstreckt sich der Schalenkörper 16a in Umfangsrichtung über ungefähr 270° (siehe insbesondere Figuren 6, 7). Der Schalenkörper 16a hat somit eine seitliche Öffnung 17, deren Breite geringfügig kleiner als der Durchmesser des Schlauches 2 ist, um den Schlauch 2 unter leichter radialer Verformung durch die seitliche Öffnung 17 in den Schalenkörper 16a einlegen zu können. Der Schalenkörper 16b erstreckt sich hierbei über ungefähr 90°, so dass er bei geschlossener Buchse 6 die seitliche Öffnung 17 des Schalenkörpers 16a vollständig verschließt.

Die beiden Buchsenteile 6a und 6b sind durch Verrastungsmittel 18 miteinander verbindbar. Die Verrastungsmittel 18 bestehen einerseits aus zwei Rastvertiefungen 20 in der Außenfläche des Schalenkörpers 16a (siehe insbesondere Figuren 6 und 7) und andererseits aus zwei Federarmen 22, die am Schalenkörper 16b angeformt sind und sich von diesem aus in Umfangsrichtung erstrecken (siehe insbesondere Figuren 6 und 8). Bei geschlossener Buchse 6 umgreifen die Federarme 22 den Schalenkörper 16a des Buchsenteils 6a teilweise, wobei an den freien Enden der Federarme 22 Rastvorsprünge 24 vorgesehen sind, die in die Rastvertiefungen 20 des Schalenkörpers 16a des Buchsenteils 6a einrasten.

Das Buchsenteil 6a ist mit axial beabstandeten Flanschen 26, 28 (Figuren 2- 4) versehen, die zur axialen Lagebegrenzung der Federarme 22 beim Verrasten der beiden Buchsenteile 6a, 6b dienen. Der Flansch 26 ist auf seiner einen Seite mit einer Fase 27 versehen, die eine Zentrierung der Federarme 22 im Zwischenraum zwischen den beiden Flanschen 26 und 28 während des Verrastungsvorganges unterstützen.

Die beiden Buchsenteile 6a, 6b sind ferner jeweils mit einer Teilringnut 30a bzw. 30b (Fig. 2) versehen, die bei geschlossener Buchse 6 sich zu einer Ringnut ergänzen, in welche die Klammer 8 eingeschnappt werden kann. Die Buchsenteile 6a und 6b sind ferner an ihrem einen axialen Ende jeweils mit einer Fase 32a bzw. 32b versehen, die sich bei geschlossener Buchse 6 zu einer konisch ausgebildeten Einführfase ergänzen, um das axiale Einführen der Buchse 6 in das Loch 10 des Halters 4 zu erleichtern.

Wie insbesondere aus den Figuren 3, 6 und 7 ersichtlich ist, ist das Buchsenteil 6a mit zwei axial verlaufenden Rippen 34 versehen, die von der Innenseite des Schalenkörpers 16a nach innen vorstehen und an ihren axialen Enden abgeschrägt sind. Das Buchsenteil 6b ist mit einer querverlaufenden Rippe 36 versehen, die von der Innenseite des Schalenkörpers 16b nach innen vorsteht und an ihren beiden Enden abgeschrägt ist. Die Rippen 34 und 36 dienen zum Festlegen des Schlauches 2 in Dreh- und Achsrichtung, wie noch genauer erläutert wird.

Das Buchsenteil 6a ist in seinem (in Fig. 2) unteren Bereich mit einer seitlichen Abflachung 38 versehen, die im montierten Zustand mit der Abflachung 14 im Loch 10 des Halters 4 zur Lagepositionierung der Buchse 6 zusammenwirkt.

Das Buchsenteil 6b ist an seiner Außenseite mit einer Ausnehmung 40 (Figuren 3, 6) versehen, die einerseits für eine Materialersparnis sorgt und andererseits dem Buchsenteil 6b mit den Federarmen 22 eine erhöhte Elastizität verleiht.

Beide Buchsenteile 6a, 6b sind an ihren entgegengesetzten axialen Enden mit abgerundeten Innenrändern 42a, 42b und 44a, 44b (Figuren 3, 4) versehen, die ein ungehindertes Abbiegen des Schlauches 2 erlauben.

Die Klammer 8 ist ein plattenförmiges Bauteil von allgemein U-förmiger Gestalt. Genauer gesagt, weist sie zwei Schenkel 46 auf, die durch einen gebogenen Endabschnitt 48 miteinander verbunden sind. Die beiden Schenkel 46 sind mit einander zugewandten kreisbogenförmigen Innenseiten 50 versehen. Die kreisbogenförmigen Innenseiten 50 gehen zur offenen Seite der Klammer 8 hin in Schrägflächen 54 über, die das Aufstecken der Klammer auf die Buchse 6 erleichtern.

Der Endabschnitt 48 ist angrenzend an den kreisbogenförmigen Innenflächen 50 mit einer querverlaufenden länglichen Öffnung 52 versehen, die oval bzw. halbmondförmig ausgebildet ist. Die querverlaufende Öffnung 52 der Klammer 8 verleiht den Schenkeln 46 federnde Eigenschaften sowohl in radialer wie auch in axialer Richtung. Die federnden Eigenschaften in radialer Richtung ermöglichen das Aufweiten der Schenkel 46, während die federnden Eigenschaften in axialer Richtung ein seitliches Auslenken der Schenkel 46 gegenüber dem Endabschnitt 48 erlauben (siehe Fig. 4), um im fertig montierten Zustand eine axiale Vorspannkraft auf die Buchse 6 auszuüben.

Die Klammer 8 ist mit einem umlaufenden Außenrand 56 versehen, welcher im Querschnitt zusammen mit dem plattenförmigen Teil der Klammer 8 ein T-Profil bildet. Der umlaufende Außenrand 56 in Form eines T-Profils unterstützt die Festigkeit der Klammer bei ihrer Federfunktion und sorgt für eine Stützwirkung bei axialer Belastung der Klammer 8 (Fig. 4). Die Klammer 8 ist bezüglich ihrer mittigen Plattenebene spiegelsymmetrisch ausgebildet, so dass sie in der in Fig. 2 dargestellten Lage oder auch umgedreht hierzu auf die Buchse 6 aufgesteckt werden kann.

Wie bereits erwähnt, sind sowohl die Buchsenteile 6a, 6b wie auch die Klammer 8 aus Kunststoff hergestellt. Zweckmäßigerweise bestehen sie aus einem schlägzäh modifizierten und füllstoffverstärkten technischen Thermoplasten. Für die Buchsenteile 6a, 6b kommt insbesondere ein technischer Thermoplast der schlagzäh modifizierten und glasfaserverstärkten PA66 + PA6 Type in Frage, die außer den erwünschten Elastizitäts- und Festigkeitseigenschaften auch resistent gegen Bremsflüssigkeit (Öl) ist. Für die Klammer 8 wird beispielsweise ein PA6-hochglasgefülllte Type (mit einer Glasfaserfüllung von ca. 50 %) verwendet. Es versteht sich, dass jedoch je nach Anwendungsfall auch andere Kunststoffe verwendet werden können.

Im folgenden wird die Montage der Verbindungsanordnung erläutert, die sich insbesondere für eine maschinelle und automatische Montage eignet.

Zunächst wird der in der Länge zugeschnittene Schlauch 2 durch die seitliche Öffnung 17 in Querrichtung in das Innere des Buchsenteils 6a eingelegt. Hierbei kommt es zu einer leichten radialen Verformung des Schlauches 2, wodurch der Schlauch 2 im Schalenkörper 16a des Buchsenteils 6a unter einer leichten Vorspannung gehalten wird. Hierauf wird das Buchsenteil 6b mit dem Buchsenteil 6a verbunden, indem die Federarme 22 über das Buchsenteil 6a geschoben werden, bis die Rastvorsprünge 24 der Federarme 22 in die Rastvertiefungen 20 des Buchsenteils 6a einschnappen. Hierbei dienen die Flansche 26 und 28 als Führung und axiale Lagebegrenzung für die Federarme 22.

Beim Verrasten der beiden Buchsenteile 6a und 6b graben sich die axial verlaufenden Rippen 34 des Buchsenteils 6a und die quer verlaufende Rippe 36 des Buchsenteils 6b in die Oberfläche des aus Gummi oder dergleichen bestehenden Schlauches 2, ohne dass der Schlauch 2 über seinen Elastizitätsbereich hinaus beansprucht wird. Die Anzahl, Formgebung und Größe der Rippen 34, 36 werden hierbei so gewählt, dass sie den Schlauch 2 sowohl in Dreh- wie auch Achsrichtung sicher festlegen. Es versteht sich, dass Anzahl, Anordnung und Formgebung der Rippen 34, 36 je nach Anwendungsfall auch anders gewählt werden können. Da im übrigen die Rippen 34, 36 aus Kunststoff bestehen und somit mit dem Schlauch eine Kunststoff/Gummi-Paarung bilden und da ferner die Enden der Rippen nicht scharfkantig ausgebildet sind, ist die Gefahr einer Beschädigung des Schlauches 2 vermieden.

Die auf diese Weise vormontierte Baueinheit aus Schlauch 2 und geschlossener Buchse 6 kann dann axial in das Loch 10 des Halters 4 eingeführt werden, nachdem der Schlauch 2 durch die entsprechend dimensionierte seitliche Öffnung 12 in das Loch 10 des Halters 4 eingebracht worden ist. Bei dem Einfiihrvorgang dienen die Abflachung 14 des Halters 4 und die Abflachung 38 des Buchsenteils 6a zur Lageorientierung der geschlossenen Buchse 6 im Loch 10 des Halters 4. Die Klammer 8 wird nun auf die geschlossene Buchse 6 so aufgesteckt, dass die Schenkel 46 der Klammer 8 mit ihren kreisbogenförmigen Innenseiten 50 in die Ringnut 30a, 30b der geschlossenen Buchse 6 einschnappen. Das hierfür erforderliche Aufweiten der Schenkel 46 wird durch die querverlaufende Öffnung 52 der Klammer 8 erleichtert, die den Schenkeln 46 federnde Eigenschaften in radialer Richtung verleiht.

Wie bereits erwähnt, verleiht die querverlaufende Öffnung 52 den Schenkeln 46 federnde Eigenschaften nicht nur in radialer, sondern auch in axialer Richtung (bezüglich der Achse der Verbindungsanordnung). Wenn daher die Klammer 8 auf die Buchse 6 aufgesteckt ist und an einer Seite des Halters 4 angreift, übt sie eine axiale Vorspannkraft auf die Buchsenteile 6a, 6b aus. Hierdurch werden an den Buchsenteilen 6a, 6b vorgesehene Schultern 29a, 29b (Fig. 3) gegen die andere Seite des Halters 4 angedrückt. Die Schultern 29a, 29b werden einerseits von einer Stirnseite des Flansches 28 des Buchsenteils 6a und andererseits von einer entsprechenden Querschnittsverringerung des Schalenkörpers 16b des Buchsenteils 6b gebildet.

Die Klammer 8 verspannt somit gewissermaßen die Buchsenteile 6a, 6b über ihre Schultern 29a, 29b mit dem Halter 4, wodurch die geschlossene Buchse 6 im Loch 10 des Halters 4 axial festgelegt wird. Hierbei kommt es zur Auslenkung der Schenkel 46 der Klammer 8 in axialer Richtung, wie dies in Fig. 4 zu sehen ist. Im Vergleich hierzu sind die Schenkel 46 in Fig. 5 ohne axiale Verformung dargestellt.

Die Verbindungsanordnung befindet sich nun im fertig montierten Zustand, in dem sie dem Schlauch die gewünschte Zugentlastung in Dreh- und Axialrichtung verleiht.

Eine Demontage ist möglich, indem die entsprechenden Schritte in der umgekehrten Reihenfolge durchgeführt werden. Um den Schlauch 2 aus der Buchse 6 zu lösen, werden die Federarme 22 des Buchsenteils 6b mittels eines Werkzeuges (nicht gezeigt) nach außen bewegt, so dass die Rastvorsprünge 24 aus den Rastvertiefungen 20 gelöst werden und das Buchsenteil 6b von dem Buchsenteil 6a abgezogen werden kann.

## Patentansprüche

1. Verbindungsanordnung zum Festlegen eines Schlauches (2) an einem Halter (4), mit
einem ersten Buchsenteil (6a) und einem zweiten Buchsenteil (6b), die beide aus Kunststoff bestehen und durch Verrastungsmittel (18) miteinander verbindbar sind, um sich zu einer den Schlauch klemmend aufnehmenden Buchse (6) zu ergänzen, und
einer aus Kunststoff bestehenden Klammer (8), die mit den beiden verbundenen Buchsenteilen (6a, 6b) in Eingriff bringbar ist, um die von ihnen gebildete Buchse (6) in einem Loch (10) des plattenförmig ausgebildeten Halters (4) festzulegen,
wobei das erste Buchsenteil (6a) einen sich in Umfangsrichtung über mehr als 180° erstreckenden Schalenkörper (16a) mit einer seitlichen Öffnung (17) aufweist, deren Breite geringfügig kleiner als der Durchmesser des festzulegenden Schlauches (2) ist, um den Schlauch (2) unter leichter radialer Verformung durch die seitliche Öffnung in den Schalenkörper (16a) seitlich einlegen zu können,
das zweite Buchsenteil (6b) einen sich über weniger als 180° erstreckenden Schalenkörper (16b) aufweist, der bei geschlossener Buchse (6) die seitliche Öffnung (17) des Schalenkörpers (16a) des ersten Buchsenteils (6a) vollständig verschließt, und
die Verrastungsmittel (18) zwei Federarme (22) aufweisen, die an dem Schalenkörper (16b) des zweiten Buchsenteils (6b) angeformt sind und von diesem aus in Umfangsrichtung verlaufen, um bei geschlossener Buchse (6) das erste Buchsenteil (6a) teilweise zu umgreifen und mit diesem verrastet zu werden.

2. Verbindungsanordnung nach Anspruch 1, **dadurch gekennzeichnet, dass** mindestens eines (6a) der Buchsenteile (6a, 6b) an seiner Innenseite eine oder mehrere axial verlaufende Rippen (34) aufweist, die bei geschlossener Buchse (6) in die Oberfläche des festzulegenden Schlauches (2) eindringen.

3. Verbindungsanordnung nach Anspruch 1 oder 2, **dadurch gekennzeichnet, dass** mindestens eines (6b) der Buchsenteile (6a, 6b) an seiner Innenseite eine oder mehrere quer verlaufende Rippen (36) aufweist, die bei geschlossener Buchse (6) in die Oberfläche des festzulegenden Schlauches (2) eindringen.

4. Verbindungsanordnung nach einem der vorhergehenden Ansprüche, **dadurch gekennzeichnet, dass** die Federarme (22) an ihren freien Enden Rastvorsprünge (24) haben, die zum Verrasten der beiden Buchsenteile (6a, 6b) in Rastvertiefungen (20) des ersten Buchsenteils (6a) einschnappen.

5. Verbindungsanordnung nach einem der vorhergehenden Ansprüche, **dadurch gekennzeichnet, dass** das erste Buchsenteil (6a) mit axial beabstandeten Flanschen (26, 28) zur axialen Lagebegrenzung der Federarme (22) versehen ist.

6. Verbindungsanordnung nach einem der vorhergehenden Ansprüche, **dadurch gekennzeichnet, dass** die beiden Buchsenteile (6a, 6b) jeweils an beiden axialen Enden mit abgerundeten Innenrändern (42a,b, 44a,b) zum ungehinderten Abbiegen des festzulegenden Schlauches (2) versehen sind.

7. Verbindungsanordnung nach einem der vorhergehenden Ansprüche, **dadurch gekennzeichnet, dass** die Klammer (8) plattenförmig ausgebildet ist und zwei durch einen Endabschnitt (48) verbundene Schenkel (46) mit einander zugewandten kreisbogenförmigen Innenseiten (50) hat, und dass die beiden Buchsenteile (6a, 6b) bei geschlossener Buchse (6) eine Ringnut (30a, 30b) bilden, in die die beiden Schenkel (46) der Klammer (8) einschnappbar sind.

8. Verbindungsanordnung nach Anspruch 7, **dadurch gekennzeichnet, dass** die beiden Buchsenteile (6a, 6b) jeweils mit einer Schulter (29a, 29b) versehen sind, die zu der Ringnut (30a, 30b) einen solchen axialen Abstand haben, dass bei fertig montierter Verbindungsanordnung die Klammer (8) an einer Seite des plattenförmigen Halters (4) anliegt und hierbei die Schultern (29a, 29b) der Buchsenteile (6a, 6b) gegen die andere Seite des plattenförmigen Halters (4) elastisch andrückt.

9. Verbindungsanordnung nach Anspruch 7 oder 8, **dadurch gekennzeichnet, dass** der Endabschnitt (48) der Klammer (8) angrenzend an den kreisbogenförmigen Innenseiten (50) der Schenkel (46) mit einer quer verlaufenden länglichen Öffnung (52) versehen ist, die den Schenkeln (46) federnde Eigenschaften sowohl in axialer wie auch in radialer Richtung verleihen.

10. Verbindungsanordnung nach einem der Ansprüche 7 bis 9, **dadurch gekennzeichnet, dass** die Klammer (8) mit einem Außenrand (56) versehen ist, der im Querschnitt als T-Profil ausgebildet ist.

11. Verbindungsanordnung nach einem der Ansprüche 7 bis 10, **dadurch gekennzeichnet, dass** die Klammer (8) bezüglich ihrer mittigen Plattenebene spiegelsymmetrisch ausgebildet ist, um in zwei um 180° gedrehten Lagen montierbar zu sein.

12. Verbindungsanordnung nach einem der vorhergehenden Ansprüche, **dadurch gekennzeichnet, dass** mindestens eines (6a) der beiden Buchsenteile (6a, 6b) an seiner Außenseite mit einer Abflachung (38) versehen ist, die an eine entsprechende Abflachung (14) im Loch (10) des Halters (4) zwecks Lageorientierung der Buchsenteile (6a, 6b) im Halter anpassbar ist.

13. Verbindungsanordnung nach einem der vorhergehenden Ansprüche, **dadurch gekennzeichnet, dass** die beiden Buchsenteile (6a, 6b) jeweils an ihrem einen axialen Ende mit einer Fase (32a, 32b) zum leichteren axialen Einführen der geschlossenen Buchse (6) in das Loch (10) des Halters (4) versehen sind.

14. Verbindungsanordnung nach einem der vorhergehenden Ansprüche, **dadurch gekennzeichnet, dass** die beiden Buchsenteile (6a, 6b) und die Klammer (8) aus schlagzäh modifizierten und füllstoffverstärkten technischen Thermoplasten hergestellt sind.

## Claims

1. Connection device for securing a hose (2) on a holder (4), with
a first bushing part (6a) and a second bushing part (6b), which are both made of plastic and can be connected together through locking means (18) in order to complete each other to form a receiving bushing (6) that clamps the hose, and
a clamp (8) made of plastic, which can be engaged with the two connection bushing parts (6a, 6b) in order to secure bushing (6) formed by them in a hole (10) of the plate-like holder (4),
wherein the first bushing part (6a) has a shell body (16a) extending in the circumferential direction over more than 180° with a lateral opening (17), the width of which is slightly smaller than the diameter of the hose (2) to be secured, in order to be able to laterally insert the hose (2) through the lateral opening into the shell body (16a) under light radial deformation,
the second bushing part (6b) has a shell body (16b) extending over less than 180°, which completely closes the lateral opening (17) of the shell body (16a) of the first bushing part (6a) when the bushing (6) is closed, and
the locking means (18) has two spring arms (22), which are shaped on the shell body (16b) of the second bushing part (6b) and extend from it in the circumferential direction in order to partially encompass the first bushing part (6a) when the bushing (6) is closed and to become locked with it.

2. Connection device according to claim 1, **characterized in that** at least one (6a) of the bushing parts (6a, 6b) has one or more axially running ridges (34) on its inside, which penetrates the surface of the hose (2) to be secured when the bushing (6) is closed.

3. Connection device according to claim 1 or 2, **characterized in that** at least one (6b) of the bushing parts (6a, 6b) has one or more diagonally running ridges (36) on its inside, which penetrates the surface of the hose (2) to be secured when the bushing (6) is closed.

4. Connection device according to one of the previous claims, **characterized in that** the spring arms (22) have bosh projections (24) on their free ends, which snap into bosh recesses (20) of the first bushing part (6a) to lock the two bushing parts (6a, 6b) together.

5. Connection device according to one of the previous claims, **characterized in that** the first bushing part (6a) is provided with axially spaced flanges (26, 28) to axially restrict the position of the spring arms (22).

6. Connection device according to one of the previous claims, **characterized in that** the two bushing parts (6a, 6b) are both provided with rounded inner edges (42a,b, 44a,b) on both axial ends for unhindered bending of the hose (2) to be secured.

7. Connection device according to one of the previous claims, **characterized in that** the clamp (8) is designed like a plate and has two legs (46) connected by an end section (48) with circular-arc-shaped insides (50) facing each other and that both bushing parts (6a, 6b) form an annular groove (30a, 30b) when the bushing (6) is closed, into which both legs (46) of the clamp (8) can be snapped.

8. Connection device according to claim 7, **characterized in that** the two bushing parts (6a, 6b) are both provided with a shoulder (29a, 29b), which are axially spaced with respect to the annular groove (30a, 30b) such that when the connection device is fully installed the clamp (8) rests against one side of the plate-like holder (4) and thereby elastically pushes the shoulders (29a, 29b) of the bushing parts (6a, 6b) against the other side of the plate-like holder (4).

9. Connection device according to claim 7 or 8, **characterized in that** the end section (48) of the clamp (8) is provided with a diagonally running oblong opening (52) adjacent to the circular-arc-shaped insides (50) of the legs (46), which give the legs (46) spring-like properties both in the axial and in the radial direction.

10. Connection device according to one of claims 7 through 9, **characterized in that** the clamp (8) is provided with an outside edge (56) that has a T profile in cross-section.

11. Connection device according to one of claims 7 through 10, **characterized in that** the clamp (8) is designed as a mirror image of its centered plate level in order to be mountable in two positions turned by 180°.

12. Connection device according to one of the previous claims, **characterized in that** at least one (6a) of the two bushing parts (6a, 6b) is provided with a flattening (38) on its outside, which can be arranged on a corresponding flattening (14) in hole (10) of holder (4) for the purpose of orienting the position of the bushing parts (6a, 6b) in the holder.

13. Connection device according to one of the previous claims, **characterized in that** the two bushing parts (6a, 6b) are both provided with a bevel (32a, 32b) on their one axial end for easier axial insertion of the closed bushing (6) into the hole (10) of the holder (4).

14. Connection device according to one of the previous claims, **characterized in that** the two bushing parts (6a, 6b) and the clamp (8) are made of impact-resistant modified and filler-reinforced technical thermoplasts.

## Revendications

1. Dispositif de raccordement pour fixer un tuyau souple (2) sur un élément de retenue (4), avec
une première partie de douille (6a) et une deuxième partie de douille (6b) qui sont toutes deux réalisées en matière plastique et peuvent être raccordées l'une à l'autre par des moyens d'encliquetage (18) pour se compléter en formant une douille (6) logeant de façon serrée le tuyau souple, et
un crampon (8) réalisé en matière plastique qui peut être mis en prise avec les deux parties de douille (6a, 6b) raccordées pour fixer la douille (6), formée par elles, dans un trou (10) de l'élément de retenue (4) constitué en forme de plaque,
la première partie de douille (6a) présentant un corps de coque (16a) s'étendant sur plus de 180° dans la direction circonférentielle, avec une ouverture (17) latérale dont la largeur est légèrement plus petite que le diamètre du tuyau souple (2) à fixer pour pouvoir insérer latéralement dans le corps de coque (16a) le tuyau souple (2) avec une légère déformation radiale à travers l'ouverture latérale,
la deuxième partie de douille (6b) présentant un corps de coque (16b) s'étendant sur moins de 180° qui, quand la douille (6) est fermée, obture complètement l'ouverture (17) latérale du corps de coque (16a) de la première partie de douille (6a), et
les moyens d'encliquetage (18) présentant deux bras de ressort (22) qui sont formés sur le corps de coque (16b) de la deuxième partie de douille (6b) et sont disposés à partir de celle-ci dans la direction circonférentielle pour pouvoir, quand la douille (6) est fermée, envelopper partiellement la première partie de douille (6a) et être encliquetés avec celle-ci.

2. Dispositif de raccordement selon la revendication 1, **caractérisé en ce que** au moins une (6a) des parties de douille (6a, 6b) présente sur son côté intérieur une ou plusieurs nervures (34) axiales qui, quand la douille (6) est fermée, pénètrent dans la surface du tuyau souple (2) à fixer.

3. Dispositif de raccordement selon la revendication 1 ou 2, **caractérisé en ce que** au moins une (6b) des parties de douille (6a, 6b) présente sur son côté intérieur une ou plusieurs nervures (36) transversales qui, quand la douille (6) est fermée, pénètrent dans la surface du tuyau souple (2) à fixer.

4. Dispositif de raccordement selon une des revendications précédentes, **caractérisé en ce que** les bras de ressort (22) ont sur leurs extrémités libres des saillies de raccordement (24) qui, pour l'encliquetage des deux parties de douille (6a, 6b), s'enclenchent dans des creux d'encliquetage (20) de la première partie de douille (6a).

5. Dispositif de raccordement selon une des revendications précédentes, **caractérisé en ce que** la première partie de douille (6a) est munie de brides (26, 28) espacées axialement pour la délimitation de position axiale des bras de ressort (22).

6. Dispositif de raccordement selon une des revendications précédentes, **caractérisé en ce que** les deux parties de douille (6a, 6b) sont respectivement munies, sur les deux extrémités axiales, de bords internes (42a,b 44a,b) arrondis pour une flexion libre du tuyau souple (2) à fixer.

7. Dispositif de raccordement selon une des revendications précédentes, **caractérisé en ce que** le crampon (8) est constitué en forme de plaque et a deux branches (46) raccordées par un tronçon d'extrémité (48) avec des côtés intérieurs (50) en arc de cercle tournés l'un vers l'autre, et **en ce que** les deux parties de douille (6a, 6b), quand la douille (6) est fermée, forment une rainure annulaire (30a, 30b) dans laquelle les deux branches (46) du crampon (8) peuvent s'enclencher.

8. Dispositif de raccordement selon la revendication 7, **caractérisé en ce que** les deux parties de douille (6a, 6b) sont respectivement munies d'un épaulement (29a, 29b) qui ont, par rapport à la rainure annulaire (30a, 30b), un écart axial tel que, dans l'état complètement monté du dispositif de raccordement, le crampon (8) appuie contre un côté de l'élément de retenue (4) en forme de plaque et presse élastiquement en l'occurrence les épaulements (29a, 29b) des parties de douille (6a, 6b) contre l'autre côté de l'élément de retenue (4) en forme de plaque.

9. Dispositif de raccordement selon la revendication 7 ou 8, **caractérisé en ce que** le tronçon d'extrémité (48) du crampon (8) est, de façon adjacente aux côtés intérieurs (50) en arc de cercle des branches (46), muni d'une ouverture (52) oblongue transversale qui confère aux branches (46) des caractéristiques élastiques aussi bien dans la direction axiale que dans la direction radiale.

10. Dispositif de raccordement selon une des revendications 7 à 9, **caractérisé en ce que** le crampon (8) est muni d'un bord extérieur (56) qui est constitué, en section transversale, en tant que profil en T.

11. Dispositif de raccordement selon une des revendications 7 à 10, **caractérisé en ce que**, par rapport à son plan de plaque médian, le crampon (8) est constitué avec une symétrie spéculaire pour pouvoir être monté dans deux positions tournées de 180°.

12. Dispositif de raccordement selon une des revendications précédentes, **caractérisé en ce que** au moins une (6a) des deux parties de douille (6a, 6b) est, sur son côté extérieur, munie d'un méplat (38) qui peut être adapté à un méplat (14) correspondant dans le trou (10) de l'élément de retenue (4) en vue d'une orientation de position des parties de douille (6a, 6b) dans l'élément de retenue.

13. Dispositif de raccordement selon une des revendications précédentes, **caractérisé en ce que** les deux parties de douille (6a, 6b) sont respectivement munies, sur une de leurs extrémités axiales, d'un chanfrein (32a, 32b) pour l'introduction axiale plus facile de la douille (6) fermée dans le trou (10) de l'élément de retenue (4).

14. Dispositif de raccordement selon une des revendications précédentes, **caractérisé en ce que** les deux parties de douille (6a, 6b) et le crampon (8) sont réalisés en thermoplastiques techniques modifiés pour résister aux chocs et renforcés de charge.
